# EUROPÄISCHE PATENTANMELDUNG

(11) **EP 1 176 758 A2**
(43) Veröffentlichungstag der Anmeldung: **30.01.2002**
(21) Anmeldenummer: 01116335.9
(22) Anmeldetag: 05.07.2001
(51) Int. Cl.: H04L 12/24

(54) **Verfahren zum Konfigurieren einer Netzschnittstelle sowie Netzelement**

(30) Priorität: 27.07.2000 DE 10036686
(71) Anmelder: SIEMENS AKTIENGESELLSCHAFT, 80333 München (DE)
(72) Erfinder: Hennes, Michael, 87600 Kaufbeuren (DE); Rosenstock, Thomas, 81543 München (DE)

(57) **Zusammenfassung**

Erläutert wird unter anderem ein Verfahren zum Konfigurieren einer Netzschnittstelle (26, 28), bei dem zur Entgegennahme von Wartungsnachrichten (16) ein einheitliches Verfahren ausgeführt wird. Abhängig vom Typ einer durch die Wartungsnachricht (16) betroffenen Protokollschicht werden von einer Schichtsteuerung (35) verschiedene Konfigurationsverfahren für verschiedene Programme zum Ausführen der Funktionen der Protokollschichten aufgerufen. Durch diese Verfahrensweise läßt sich die Schnittstelle (26, 28) auf einfache Art konfigurieren.

## Beschreibung

Die Erfindung betrifft ein Verfahren zum Konfigurieren einer Netzschnittstelle, bei dem ein Netzelement in einem Übertragungsnetz mindestens eine Schnittstelle zum Übertragungsnetz enthält. Die Arbeitsweise der Schnittstelle wird durch einen Protokollstapel festgelegt, der mehrere Protokollschichten enthält.

Das Übertragungsnetz arbeitet paket- oder leitungsvermittelt. Beispielsweise werden im Internet Datenpakete aufgrund einer Adresse in jedem Datenpaket von einem Sender zum Empfänger übertragen. Oder es werden durchschaltevermittelte Verfahren eingesetzt, wie sie aus Telekommunikationsnetzen bekannt sind. Als Übertragungsprotokolle werden standardisierten Protokolle eingesetzt, z.B. das Ethernet-, das Token-Ring-, oder das ATM-Protokoll (Asynchronous Transfer Mode).

Die Protokollschichten werden gemäß dem OSI-Standard (Open Systems Interconnection) oder dem TCP/IP-Standard (Transmission Control Protocol/ Internet Protocol) eingeteilt. Die untere Schicht bilden die physikalischen Übertragungselemente. Höhere Schichten dienen zur Fehlersicherung und zum Leiten der Nachrichten.

Beim Konfigurieren wird ein Protokollstapel dadurch aufgebaut, daß Protokollschichten hinzugefügt werden oder die Verknüpfung von Protokollschichten angegeben wird. Andererseits werden beim Konfigurieren aber auch Protokollschichten oder Verknüpfungen von Protokollschichten eines Protokollstapels entfernt. Das Konfigurieren wird üblicherweise mit einem Netzwartungsprogramm durchgeführt. Bekannte Netzwartungsprogramme ermöglichen es, den Protokollstapel einer Schnittstelle über den Internet-Dienst Telnet und eine Kommandosprache zu konfigurieren. Jedoch müssen eine Vielzahl von Befehlen der Kommandosprache in einem Programm implementiert werden, so daß die Anforderungen für das Erstellen und die Pflege des Programms hoch sind und bei der Einbeziehung weiterer Schnittstellen und Protokollschichten steigen.

Es ist Aufgabe der Erfindung, ein einfaches Verfahren zum Konfigurieren einer Schnittstelle anzugeben. Außerdem soll ein Netzelement angegeben werden, das für die Durchführung dieses Verfahrens geeignet ist.

Die Erfindung geht von der Erkenntnis aus, daß die Anzahl der in die Konfiguration einzubeziehenden Protokollschichten steigt, weil neue Schnittstellen, z.B. gemäß der ADSL-Technik (Asymmetrical Digital Subscriber Line), oder/und Netzelemente entwickelt werden, die mehrere Funktionen übernehmen, z.B. die Funktion eines ATM-Crossconnects, eines sogenannten Remote Access Servers und eines sogenannten Local Accesss Concentrators zum Übertragen von Daten betreiberfremder Anbieter mit Hilfe von Tunnel-Protokollen. Beim Einsatz des bekannten Verfahrens müßten für neue Schnittstellen und neue Protokollschichten neue Kommandos der Kommandosprache vorgegeben werden. Andererseits läßt sich der Befehlssatz der Kommandosprache erheblich verringern, wenn das Konfigurieren durch ein geeignetes Verfahren unterstützt wird.

Beim erfindungsgemäßen Verfahren wird beim Ausführen eines Wartungsprogramms im Netzelement zur Seite eines Netzwartungszentrums hin ein einheitliches Verfahren verwendet, um Wartungsnachrichten entgegenzunehmen und zu bestätigen, die Protokollschichten unterschiedlichen Typs betreffen. Die auf der Seite des Netzwartungszentrums und auf der Seite des Netzelements eingesetzten Einheiten, z.B. Pogramme, vereinfachen sich, weil nur ein einheitliches Verfahren programmiert werden muß.

Das erfindungsgemäße Verfahren geht außerdem von der Erkenntnis aus, daß unabhängig vom Typ einer Protokollschicht die Einbettung in den Protokollstapel grundsätzlich gleich ist. Die Wartungsnachrichten legen beim erfindungsgemäßen Verfahren die Verknüpfung der durch die Wartungsnachricht betroffenen Protokollschicht mit einer anderen Protokollschicht desselben Protokollstapels fest.

Abhängig vom Typ der durch die Wartungsnachricht betroffenen Protokollschicht wird beim erfindungsgemäßen Verfahren ein Konfigurationsverfahren ausgeführt, das vom Hersteller des zu dieser Protokollschicht gehörenden Programms vorgesehen ist. Die Konfigurationsverfahren für verschiedene Programme unterscheiden sich. Dem Administrator bzw. dem Programmierer des Programms auf der Seite des Netzelementes bleibt dies jedoch aufgrund des einheitlichen Verfahrens zur Entgegennahme der Wartungsnachrichten verborgen. In einem letzten Verfahrensschritt wird bei der Ausführung des Konfigurationsverfahrens die Schnittstelle gemäß der in der Wartungsnachricht enthaltenen Verknüpfung konfiguriert.

Neu entwickelte Protokollschichten und Schnittstellen lassen sich leicht in das erfindungsgemäße Verfahren einbeziehen. Die einheitliche Entgegennahme der Wartungsnachrichten bleibt unverändert. Nur das Programm oder eine aus mehreren Programmen bestehendes Programmsystem zum Starten der Konfigurationsverfahren wird um einen neuen Protokollschichttyp erweitert und veranlaßt beim Auftreten dieses Typs die Ausführung der neu entwickelten Programme für die neue Protokollschicht oder die neue Schnittstelle.

Bei einer Weiterbildung arbeitet das Wartungsprogramm gemäß dem Protokoll SNMP (Simple Network Management Protocol), dem Standard für die Wartung von Netzelementen, z.B. im Internet oder in einem Firmennetz. Bei der Weiterbildung wird eine Datenstruktur festgelegt, die Datenfelder für Daten enthält, die für die Festlegung der Verknüpfung einer Protokollschicht erforderlich sind. Die Wartungsnachrichten enthalten, wie bereits erwähnt, die Daten für die Festlegung der Verknüpfung. Nach der Entgegennahme dieser Daten durch das Wartungsprogramm werden die Daten in Datenobjekten mit der festgelegten Datenstruktur zur weiteren Bearbeitung gespeichert. Die Datenstruktur wird in eine Baumstruktur zur Strukturierung einer Datenbasis eingegliedert. Innerhalb der Baumstruktur wird jede Datenstruktur durch eine Folge von Ziffern eindeutig bezeichnet. In den Wartungsnachrichten lassen sich durch Angabe der Ziffernfolge so auf einfache Art Objekte mit der betreffenden Datenstruktur in dem die Wartungsnachricht auswertenden Netzelement bezeichnen. Datenobjekte und Wartungsnachrichten sind also unmittelbar verknüpft.

Die Datenstruktur wird bei einer nächsten Weiterbildung zusätzlich zu der im Standard SNMP festgelegten Datenstruktur ifTable und/oder zur Datenstruktur ifStackTable vorgegeben. Die Objekte der Datenstruktur ifTable haben beispielsweise gemäß Standard SNMP das Objektkennzeichen 1.3.6.1.2.1.2.2. Nicht jedes Datum der Datenstruktur ifTable darf gemäß Standard SNMP von einem entfernten Netzwartungsrechner aus mit Werten belegt werden. In der Datenstruktur ifStackTable können zwar neue Einträge vom entfernten Netzwartungsrechner aus erzeugt werden, aber es fehlen zum Konfigurieren von Protokollstapeln notwendige Daten. Der Standard SNMP läßt sich durch das Definieren und Verwenden einer zusätzlichen Datenstruktur einhalten, deren Daten sowohl gelesen als auch geschrieben werden dürfen, in der vom Netzwartungszentrum aus neue Einträge erzeugt und in der alle benötigten Daten gespeichert werden können. Bei unveränderten Standard lassen sich die Funktionen für das einheitliche Verfahren zur Entgegennahme der Wartungsnachrichten auf einfache Art realisieren.

Die Datenstruktur läßt sich zunächst in einer privaten Datenbasis festgelegt. Später ist die Übernahme in eine standardisierte Datenbasis, z.B. in die Datenbasis MIB II (Management Information Base) bzw. deren Nachfolger vorgesehen.

Alternativ läßt sich der SNMP-Standard ändern, so daß die Datenstrukturen ifTable UND/oder ifStackTable für das erfindungsgemäße Verfahren eingesetzt werden können.

Bei einer nächsten Weiterbildung wird als Wartungsprotokoll das Protokoll CMIP (Common Management Information Protocol) eingesetzt, das gemäß den ITU-T Standards (International Telecommunication Union - Telecommunication Standardisation Sector) X.700 ff., insbesondere X.711 definiert ist und ähnliche Datenmodelle wie das Protokoll SNMP nutzt, dieses jedoch einmal ablösen könnte. Als Wartungsprogramm wird aber auch der Internetdienst Telnet eingesetzt. Das einheitliche Verfahren zur Entgegennahme der Wartungsnachrichten ermöglicht es, mit nur sehr wenigen Kommandos eine große Anzahl von Schnittstellen und Protokollschichten in die Konfiguration einzubeziehen.

Die Ausführung der Konfigurationsverfahren wird bei einer anderen Weiterbildung durch mindestens ein Schichtsteuerungsprogramm veranlaßt. Durch die Trennung des Aufrufs der Konfigurationsprogramme vom einheitlichen Verfahren zur Annahme der Wartungsnachrichten wird erreicht, daß die Entwicklung beider Programmkomponenten unabhängig voneinander durchgeführt werden kann. Für das Wartungsprogramm lassen sich marktübliche Programme verwenden, während in das Schichtsteuerprogramm neue Konfigurationsverfahren für neu entwickelte Protokollschichten auf einfache Art einbezogen werden können. Mehrere Schichtsteuerungsprogramme für jeweils verschiedene Konfigurationsverfahren werden eingesetzt, um übersichtlichere Programme zu erhalten.

Bei einer nächsten Weiterbildung wird neben dem Wartungsprogramm und dem Schichtsteuerungsprogramm ein Zugriffssystem eingesetzt, z.B. ein Zugriffsprogramm. Das Zugriffsprogramm tauscht mit dem Wartungsprogramm und dem Schichtsteuerungsprogramm interne Nachrichten aus und dient dem Zugriff auf Daten, deren Werte aufgrund der in den Wartungsnachrichten angegebenen Verknüpfung zu ändern sind. Diese Daten sind in einer Datenbasis gespeichert. Die Struktur der Datenobjekte in der Datenbasis ist vorzugsweise durch einen Standard festgelegt, z.B. durch den Standard SNMP.

Bei einer Ausgestaltung des Verfahrens wird innerhalb des Netzelementes zum Konfigurieren einer Schnittstelle automatisch ein Anreiz erzeugt, der im wesentlichen einem für denselben Konfigurationsvorgang von einem Netzwartungsprogramm auf der Seite des Administrators zu erzeugenden Anreiz entspricht. Protokollschichten werden somit nicht nur vom Netzwartungsrechner aus mit Hilfe von Wartungsnachrichten erzeugt, sondern auch indirekt aufgrund anderer Vorgänge im Netzelement. Durch das automatische Erzeugen von Anreizen lassen sich Fehlkonfigurationen vermeiden.

Der Anreiz wird bei einer Weiterbildung an das Zugriffssystem gerichtet. Das Zugriffssystem führt dann die durch den Anreiz erforderlichen Änderungen der Daten in dem Datenobjekt mit der festgelegten Datenstruktur durch und veranlaßt die Ausführung der Konfigurationsverfahren, beispielsweise durch das Senden interner Nachrichten an das Schichtsteuerungsprogramm bzw. eines der Schichtsteuerungsprogramme.

Bei Ausgestaltungen des erfindungsgemäßen Verfahrens wird durch das Verfahren eine Protokollschicht auf einen Protokollstapel aufgesetzt. Alternativ werden durch das Verfahren zwei Protokollstapel miteinander verknüpft. Das Aufsetzen einer Schicht oder das Verknüpfen zweier Protokollstapel erfolgt bei einer weiteren Ausgestaltung abhängig vom Wert eines bestimmten Datums in der Wartungsnachricht, z.B. einem Index für die zu erzeugende Protokollschicht.

Bei einer anderen Ausgestaltung wird mit Hilfe des Verfahrens eine Protokollschicht aus einem Protokollstapel entfernt. Alternativ wird mit Hilfe des Verfahrens eine Verknüpfung zweier Protokollstapel entfernt. Die Auswahl der Alternativen erfolgt abhängig von einem Prüfschritt, in dem ermittelt wird, ob mit der durch die Wartungsnachricht betroffenen Protokollschicht andere Protokollschichten verknüpft sind. Ist eine weitere Verknüpfung vorhanden, so wird zunächst nur eine Verknüpfung entfernt. Ist keine weitere Verknüpfung vorhanden, so wird die Protokollschicht aus dem Protokollstapel entfernt.

Ein zweiter Aspekt der Erfindung betrifft ein Netzelement, das ein Computerprogramm enthält, bei dessen Ausführung durch einen Prozessor der Einsatz des Netzelementes im erfindungsgemäßen Verfahren oder in einer seiner Weiterbildungen ermöglicht wird. Somit gelten die oben genannten technischen Wirkungen auch für das Netzelement.

Außerdem betrifft die Erfindung ein Computerprogramm, bei dessen Ausführung die Schritte des erfindungsgemäßen Verfahrens oder seiner Weiterbildungen ausgeführt werden. Auch Datenträger mit diesem Computerprogramm sind durch die Erfindung betroffen. Die für die Durchführung des Verfahrens benötigten Einheiten lassen sich jedoch auch ohne Programm durch elektronische Schaltungen realisieren.

Im folgenden werden Ausführungsbeispiele der Erfindung an Hand der beiliegenden Zeichnungen erläutert. Darin zeigen:
- Figur 1: einen Teil eines Wartungsnetzes,
- Figur 2: ein Datenobjekt mit Tabellenstruktur,
- Figur 3A: einen aufzubauenden Protokollstapel,
- Figur 3B: Verfahrensschritte, die beim Einrichten einer Protokollschicht ausgeführt werden,
- Figur 4A: zwei zu verknüpfende Protokollstapel,
- Figur 4B: Verfahrensschritte, die beim Verknüpfen von Protokollschichten ausgeführt werden, und
- Figur 5: Verfahrensschritte, die beim Entfernen einer Protokollschicht bzw. beim Entfernen der Verknüpfung zwischen Protokollschichten ausgeführt werden.

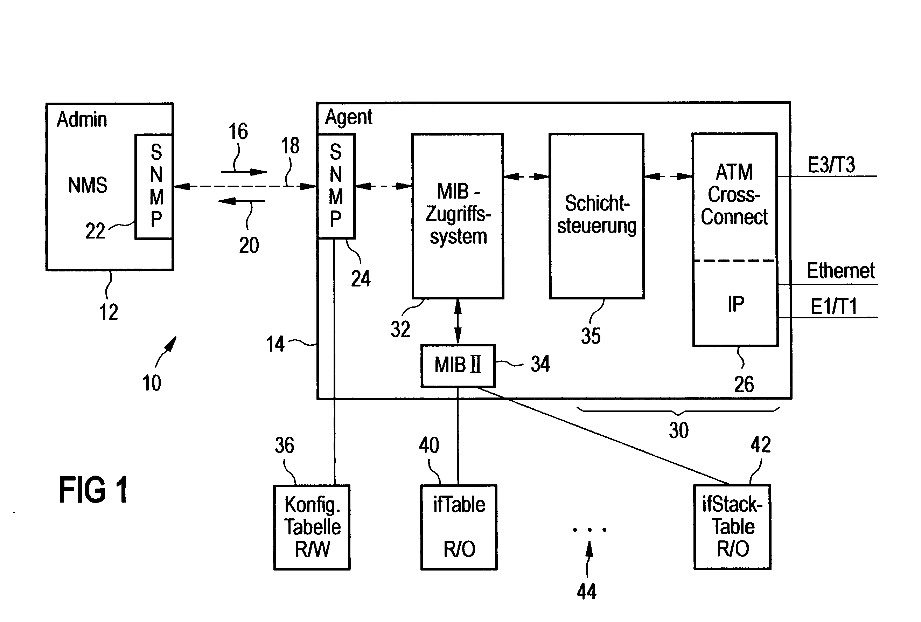

Figur 1 zeigt einen Teil eines Wartungsnetzes 10, das einen Netzwartungsrechner 12 und ein Netzelement 14 enthält. Der Netzwartungsrechner 12 wird auch als Netmanagementsystem NMS bezeichnet. Bedient wird das Netzelement 14 von einem Administrator Admin. Der Administrator startet Programmabläufe in einem administratorseitigen Wartungsprogramm (nicht dargestellt). Durch diese Programmabläufe werden Wartungsnachrichten 16 erzeugt, die vom Netzwartungsrechner 12 zum Netzelement 14 beispielsweise über ein Datenübertragungsnetz 18 übertragen werden. Das Netzelement 14 beantwortet die Wartungsnachrichten 16 mit Hilfe von Bestätigungsnachrichten 20. Die Wartungsnachrichten 16 und die Bestätigungsnachrichten 20 werden zwischen einer SNMP-Schnittstelle 22 im Netzwartungsrechner 12 und einer SNMP-Schnittstelle 24 im Netzelement 14 ausgetauscht. Beide Schnittstellen 22 und 24 arbeiten nach dem SNMP-Protokoll (Simple Network Management Protocol). Die Schnittstelle 24 ist Bestandteil eines netzelementseitigen Wartungsprogramms, das auch als sogenannter Agent bezeichnet wird.

Das Netzelement 14 ist ein sogenannter HUB, der den Datenverkehr von nicht dargestellten Benutzer-PCs zusammenfaßt, die über ADSL Netzwerkkarten angeschlossen sind (nicht dargestellt). Das Netzelement 14 enthält eine Schnittstelle 26, die zusammen mit anderen Schnittstellen gleichen oder anderen Aufbaus eine durch eine Klammer angedeutete Netzschnittstelle 30 bildet, über die auch die Wartungsnachrichten 16 und die Bestätigungsnachrichten 20 übertragen werden. An der Netzschnittstelle 30 werden auf der unteren Protokollschicht z.B. die Protokolle E1/T1, E3/T3 oder Ethernet eingesetzt. Ein Beispiel für einen Protokollstapel der ATM-Schnittstelle 26 ist eine Protokollschichtung gemäß den Protokollen E3/T3, ATM, AAL5 (ATM Adaption Layer) und IPOA (IP Over ATM). Die ATM-Datenpakete werden von den ADSL-Netzwerkkarten erzeugt bzw. bearbeitet.

Das Netzelement 14 enthält ein MIB-Zugriffssystem 32, das zum Zugriff auf eine Datenbasis 34 dient. Die Datenbasis wird gemäß SNMP-Standard auch als Management Information Base II (MIB II) bezeichnet. Außerdem enthält das Netzelement 14 eine Schichtsteuerung 35, die Konfigurationsprogramme der Schnittstellen 26 und 28 zum Konfigurieren der Protokollschichten aufruft.

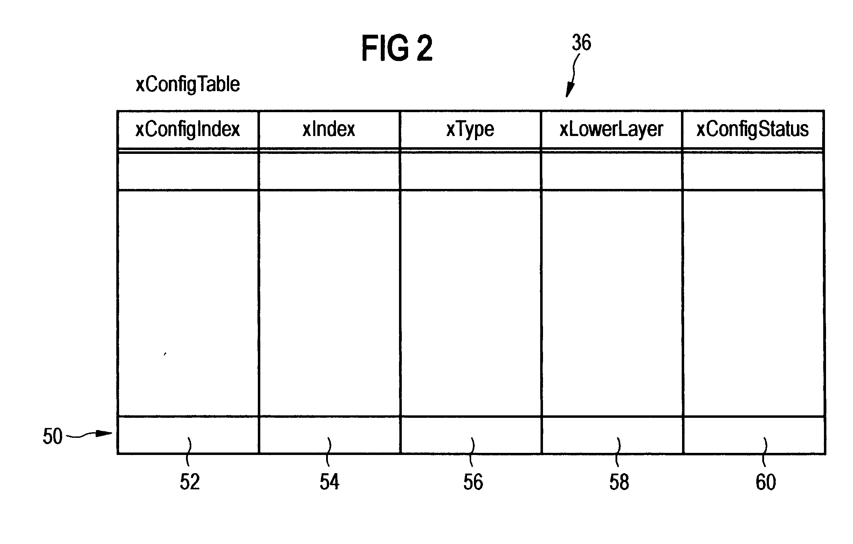

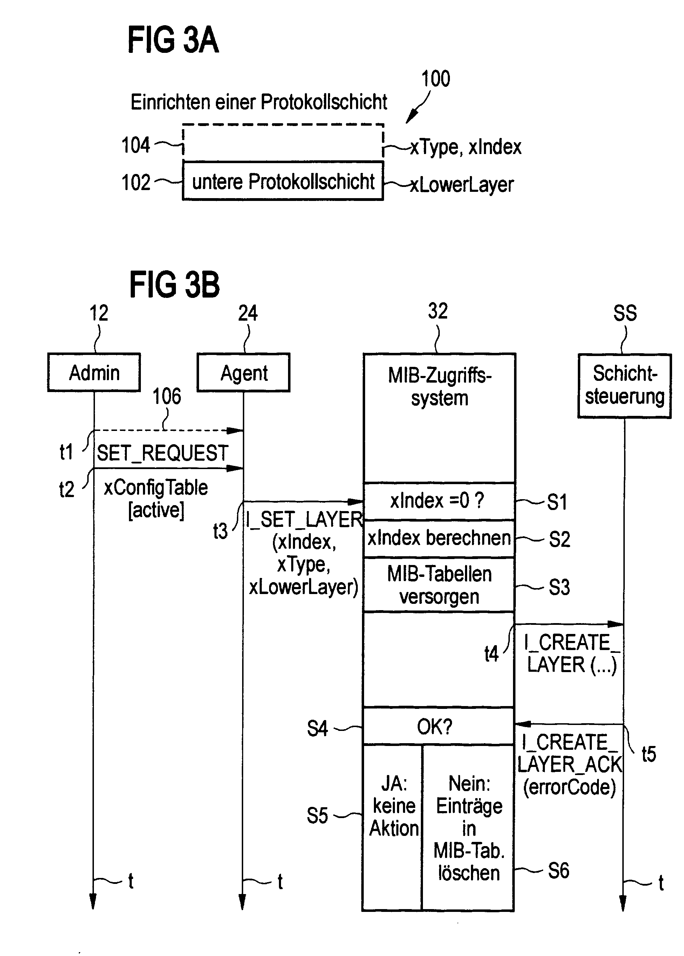

Die SNMP-Schnittstelle 24, das MIB-Zugriffssystem 32 und die Schichtsteuerung 35 sind als Programme realisiert, die in einem Speicher des Netzelementes 14 gespeichert sind und deren Programmbefehle durch einen nicht dargestellten Prozessor ausgeführt werden. Das Zusammenwirken der Schnittstelle 24, des Zugriffssystems 32 und der Schichtsteuerung 35 wird unten an Hand der Figuren 3A, 3B, 4A, 4B und 5 erläutert. Das Programm der Schnittstelle 24 greift auf ein Datenobjekt 36 mit Tabellenstruktur zu. Die Struktur des Datenobjektes 36 wird unten an Hand der Figur 2 erläutert. Das Datenobjekt 36 ist im Speicher des Netzelementes 14 gespeichert. Vom Netzwartungsrechner 12 aus können Daten in Datenfelder des Datenobjektes 36 geschrieben sowie neue Einträge erzeugt werden. Weiterhin ist es möglich, die Werte von Daten des Datenobjektes 36 vom Netzwartungsrechner 12 aus zu lesen.

Die Datenbasis 34 enthält Datenobjekte mit einer Datenstruktur, wie sie durch den Standard SNMP vorgegeben ist, beispielsweise mit Datenstrukturen gemäß Datenbasis MIB II, z.B. die ifTable genannte Tabelle 40, in der Daten über Protokollschichten gespeichert werden. Eine ifStackTable genannte Tabelle 42 enthält weitere Daten über die Protokollstapel der Schnittstellen 26 und 28. Weitere Datenobjekte 44 sind durch Punkte angedeutet.

Figur 2 zeigt den Aufbau des Datenobjektes 36. Mit Hilfe der standardisierten Syntaxnotation ASN.1 gemäß X.208 ist die Struktur des Datenobjektes 36 wie folgt definiert:

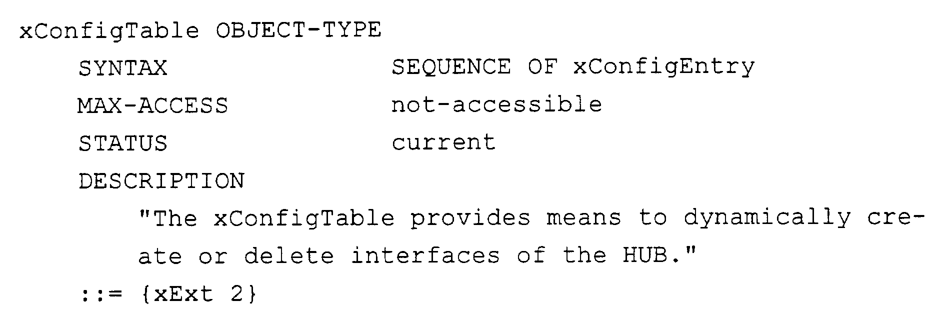

Im folgenden wird den Namen der neu definierten Datenstrukturen ein "x" vorangestellt, um diese Datenstrukturen von bereits festgelegten Datenstrukturen zu unterscheiden. In der Praxis wird anstelle des "x" beispielsweise die Zeichenfolge "phubIf" verwendet, um nach Art eines "sprechenden" Namens anzuzeigen, daß Datenstrukturen eines HUB's und spezielle Protokollschichten betroffen sind, die historisch bedingt noch als Schnittstelle (Interface) bezeichnet werden. Die Definition bedeutet, daß ein Objekttyp bzw. eine Datenstruktur festlegt wird. Die Datenstruktur xConfigTable ist eine Folge von Einträgen xConfigEntry, die als Zeilen einer Tabelle angesehen werden können. Auf Datenobjekte vom Typ xConfigTable kann nicht als Ganzes zugegriffen werden. Das Feld STATUS bezeichnet die oben dargestellte Definition der Datenstruktur als die aktuelle Definition. Gemäß Beschreibung dienen Datenobjekte vom Typ xConfigTable zum dynamischen Einrichten oder Entfernen von Schnittstellen eines Netzelementes, z.B. des Netzelementes 14. Die letzte Zeile der Definition ordnet die Datenstruktur xConfigTable unterhalb einer Datenstruktur xExt an zweiter Stelle im Kennzeichnungsbaum einer privaten Datenbasis des Herstellers des Netzelementes 14 an.

Die Struktur eines Eintrages, d.h. einer Zeile der Datenstruktur xConfigTable, ist wie folgt definiert:

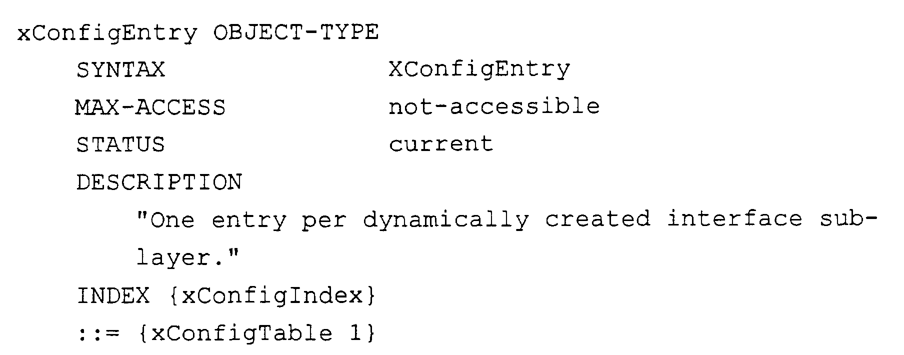

Die Struktur eines Eintrages xConfigEntry ist als Objekttyp vorgegeben. Ein Eintrag enthält seinerseits eine weiter unten erläuterte Struktur xConfigEntry. "X" wird in der Praxis beispielsweise durch "PhubIf" ersetzt. Auf einen Eintrag selbst kann nicht als Ganzes zugegriffen werden. Das Statusfeld der Definition hat den Wert "current", d.h. die Definition ist derzeit gültig. Gemäß der Beschreibung im Feld DESCRIPTION wird pro Protokollschicht einer Schnittstelle ein Eintrag angelegt. Für den Zugriff auf einen Eintrag werden, wie im Feld INDEX angegeben, Spaltenobjekte mit einer unten noch näher erläuterten Spaltenstruktur xConfigIndex verwendet. Im Kennzeichnungsbaum ist die Datenstruktur xConfigEntry unterhalb der Datenstruktur xConfigTable an erster Stelle angeordnet. Figur 2 zeigt einen Eintrag 50 des Datenobjektes 36.

Die Struktur XConfigEntry ist folgendermaßen definiert:

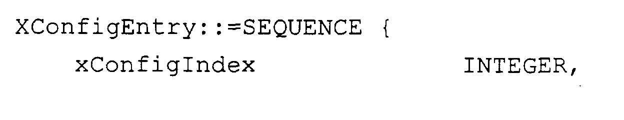

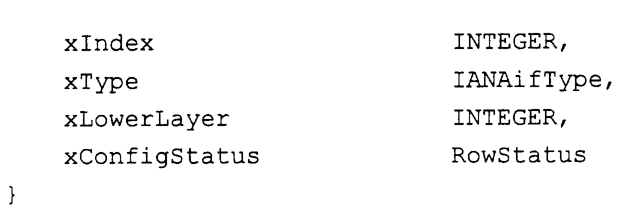

Die Struktur eines Eintrages ist durch Datenstrukturen festgelegt, die als xConfigIndex, xIndex, xType, xLowerLayer und xConfigStatus bezeichnet werden. In Datenobjekten mit den Datenstrukturen xConfigIndex, xIndex und xLowerLayer werden Ganzzahlwerte gespeichert. In Datenobjekten der Datenstruktur xType, werden die von der IANA (Internet Assigned Numbers Authority) vorgegebenen Werte für Schnittstellentypen eingetragen, z.B. der Wert "37" für ATM. In Datenobjekten mit der Datenstruktur xConfigStatus wird während des Anlegens eines Eintrags der jeweilige Status eingetragen.

Figur 2 zeigt Spaltenobjekte 52 bis 60 des Eintrages 50. Die Spaltenobjekte 52 bis 60 haben in dieser Reihenfolge die Datenstrukturen xConfigIndex, xIndex, xType, xLowerLayer und xConfigStatus, die wie folgt definiert sind:

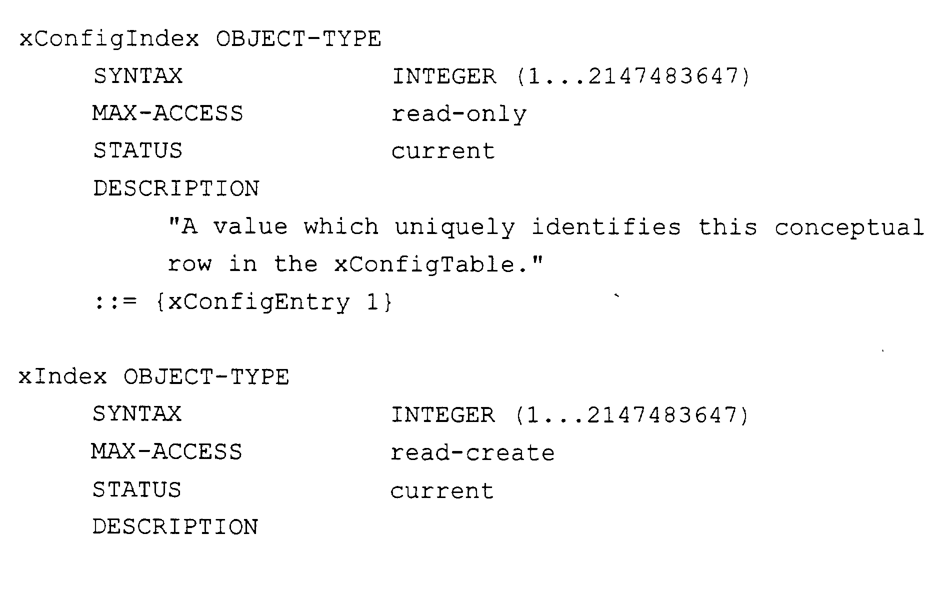

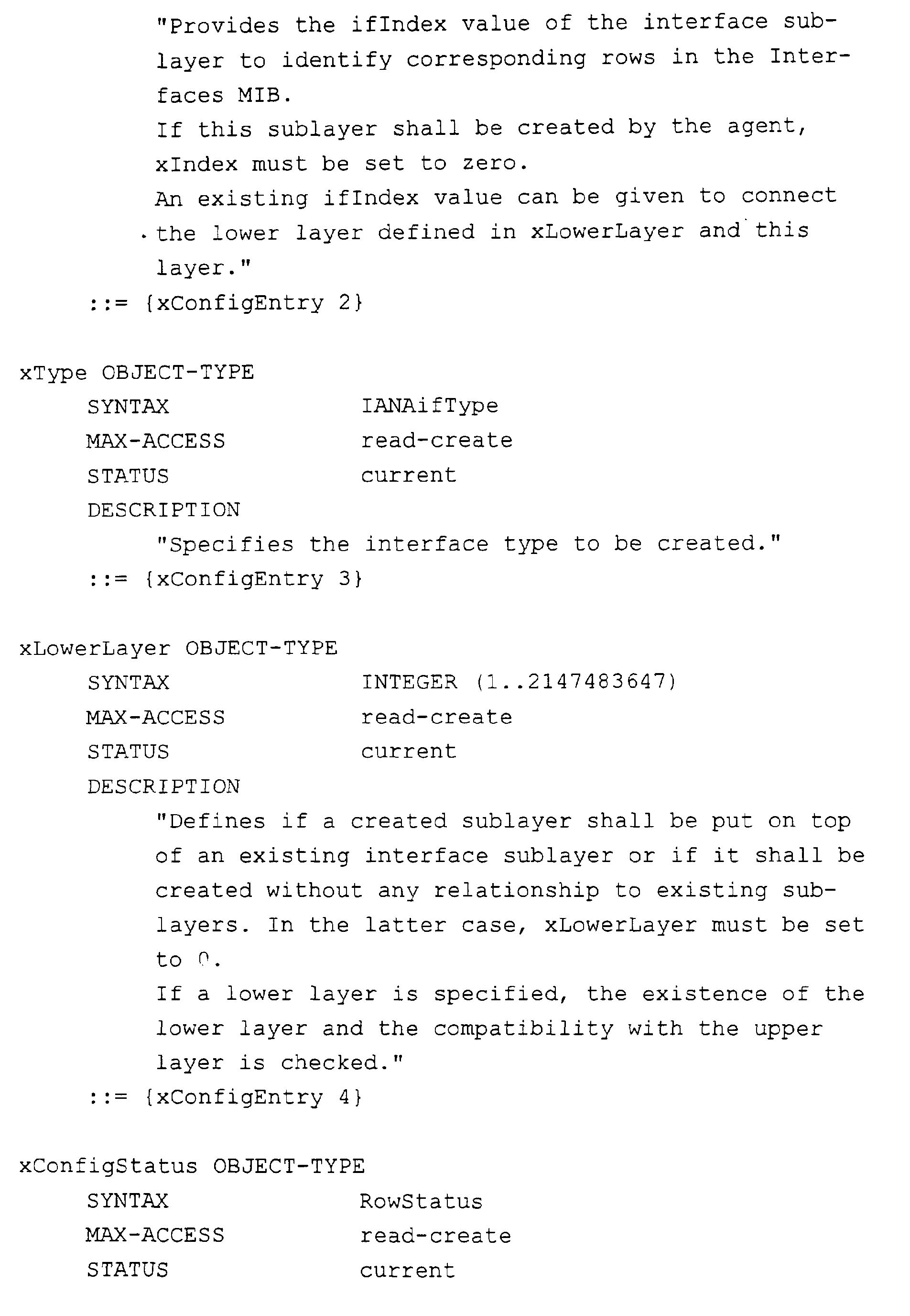

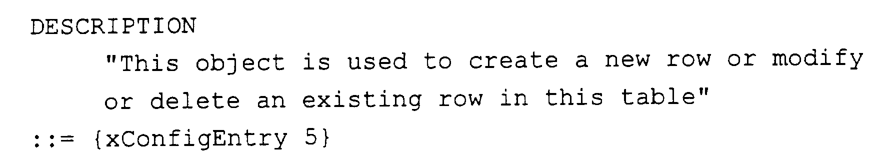

Aufgrund der Definitionen kann ein Spaltenobjekt mit der Datenstruktur xConfigIndex, z.B. das Spaltenobjekt 52, nur gelesen werden. Die Spaltenobjekte des Typs xConfigIndex dienen zur Indexierung einzelner Einträge in Datenobjekten mit der Datenstruktur xConfigTable. Der Index für das Spaltenobjekt vom Typ xConfigIndex ist beim Erzeugen eines Eintrags mit Hilfe einer Wartungsnachricht SET_REQUEST anzugeben, mit der das Spaltenobjekt des Typs xConfigStatus des gleichen Eintrags auf einen Zustand "erzeuge und Warte" (create and wait) gesetzt wird. Der Index wird dann automatisch dem Spaltenobjekt des Typs xConfigIndex des neuen Eintrags zugeordnet. Im Kennzeichnungsbaum ist die Datenstruktur xConfigIndex an erster Stelle unterhalb der Datenstruktur xConfigEntry angeordnet.

Die Daten von Spaltenobjekten mit den Datenstrukturen xIndex, xType, xLowerLayer und xConfigStatus, z.B. die Spaltenobjekte 54 bis 60, können gelesen werden und durch sogenannte SET_REQUEST Wartungsnachrichten mit einem Wert belegt werden. Der Standard SNMP, speziell der Teil SMIv2 (Structure of Management Information Version 2), legt den genauen Ablauf zum Übertragen von Wartungsnachrichten fest.

Die Spaltenobjekte mit der Datenstruktur xIndex, z.B. das Spaltenobjekt 54, enthalten einen Indexwert zur Bezeichnung der betreffenden Protokollschicht. Dieser Indexwert wird im folgenden auch als Protokollschichtindex bezeichnet. Zusammengehörige Einträge in der Datenbasis 34 haben den gleichen Indexwert. Wenn eine Protokollschicht erzeugt werden soll, muß durch das Wartungsprogramm der Wert "0" für das betreffende Spaltenobjekt mit der Datenstruktur xIndex angegeben werden. Ein bereits vorhandener Wert ist anzugeben, wenn die durch den Indexwert bezeichnete Protokollschicht mit der in der Datenstruktur xLowerLayer bezeichneten Protokollschicht verbunden werden soll. Die Datenstruktur xIndex ist an zweiter Stelle unterhalb der Datenstruktur xConfigEntry im Kennzeichnungsbaum angeordnet.

Spaltenobjekte mit der Datenstruktur xType enthalten den Protokollschichttyp der durch den jeweiligen Eintrag betroffenen Protokollschicht. Im Kennzeichnungsbaum ist die Datenstruktur xType an dritter Stelle unterhalb der Datenstruktur xConfigEntry angeordnet.

Daten der Spaltenobjekte mit der Datenstruktur xLowerLayer bezeichnen Indexwerte einer bereits angelegten Protokollschicht, die unter der Protokollschicht liegt, auf die sich der Eintrag bezieht, zu dem das Spaltenobjekt mit der Datenstruktur xLowerLayer gehört. Der Eintrag für die unterste Protokollschicht eines Protokllstapels enthält ein Spaltenobjekt der Datenstruktur xLowerLayer mit dem Wert Null. Wenn ein Indexwert einer darunterliegende Schicht angegeben wird, wird geprüft, ob eine Protokollschicht mit diesem Indexwert vorhanden ist und ob beide Protokollschichten kompatibel zueinander sind, d.h. ob solche Protokollschichten unmittelbar übereinander angeordnet werden dürfen. Im Kennzeichnungsbaum ist die Datenstruktur xLowerLayer an vierter Stelle unterhalb der Datenstruktur xConfigEntry angeordnet.

Spaltenobjekte mit der Datenstruktur xConfigStatus, z.B. das Spaltenobjekt 60, werden benötigt, um einen neuen Eintrag in Datenobjekten mit der Datenstruktur xConfigTable, z.B in das Datenobjekt 36, einzufügen oder um einen bereits vorhandenen Eintrag zu ändern oder zu entfernen. Im Kennzeichnungsbaum ist die Datenstruktur xConfigStatus an fünfter Stelle unterhalb der Datenstruktur xConfigEntry angeordnet.

Die Verwendung von Spaltenobjekten mit den Datenstrukturen xConfigIndex, xIndex, xType, xLowerLayer und xConfigStatus, insbesondere die Verwendung der Spaltenobjekte 52 bis 60, wird im folgenden an Hand der Figuren 3A, 3B, 4A, 4B und 5 erläutert.

Figur 3A zeigt einen Protokollstapel 100, dessen unterste Protokollschicht 102 bereits festgelegt worden ist. In Figur 3B werden Verfahrensschritte erläutert, bei deren Ausführung dem Protokollstapel 100 eine obere Protokollschicht 104 hinzugefügt wird. Zueinander parallele Zeitachsen t betreffen Vorgänge im Netzwartungsrechner 12, in der Schnittstelle 24 sowie in der Schichtsteuerung 35. Vorgänge im MIB-Zugriffssystem 32 werden in der bei Programmablaufplänen üblichen Darstellungsweise dargestellt. Auf den Zeitachsen t liegen frühere Zeitpunkte weiter oben als spätere Zeitpunkte. Etwa gleichzeitig stattfindende Ereignisse liegen auf einer horizontalen Geraden.

Zu einem Zeitpunkt t1 beginnend werden zum Schnittstellenprogramm 24 des Netzelementes 14 Wartungsnachrichten 106 übertragen, mit deren Hilfe die Datenobjekte 54 bis 60 des in Figur 2 gezeigten Eintrages 50 mit Werten belegt werden. Vom Netzwartungsrechner 12 aus wird durch den Administrator Admin ein Konfigurations-Index vorgegeben. Der Konfigurations-Index wird in einer Wartungsnachricht SET_REQUEST angegeben, mit deren Hilfe das Datenobjekt 60 des Typs xConfigStatus ein Wert für den Zustand "erzeuge und warte" (create and wait) zugewiesen werden soll. Der angegebene Konfigurations-Index wird automatisch im Datenobjekt 52 gespeichert. Das Spaltenobjekt 60 des Eintrages 50 wird mit einem Wert belegt, der anzeigt, daß dieser Eintrag 50 momentan aufgebaut wird. In der den Status betreffenden Wartungsnachricht ist das Kennzeichen der Datenstruktur xConfigStatus im Kennzeichnungsbaum angegeben. Das Kennzeichen dient zusammen mit dem Konfigurations-Index zur Adressierung des Spaltenobjektes 60.

Mit Hilfe von zwischen dem Zeitpunkt t1 und einem Zeitpunkt t2 liegenden Wartungsnachrichten (nicht dargestellt) werden anschließend nacheinander Werte für die Spaltenobjekte 58, 56 und 54 vom Typ xLowerLayer, xType bzw. xIndex gesetzt. Das Spaltenobjekt 58 erhält einen Wert, der die untere Protokollschicht 102 bezeichnet. Das Spaltenobjekt 56 für den Schnittstellentyp wird mit einem Wert belegt, der den Typ der einzurichtenden Protokollschicht gemäß Standard SNMP angibt, z.B. mit dem Wert "37" für eine ATM-Protokollschicht. In einem folgenden Schritt wird für das Spaltenobjekt 54 der Wert "0" vorgegeben.

Zu einem Zeitpunkt t2 wird vom Netzwartungsrechner 12 zum Schnittstellenprogramm 24 eine Wartungsnachricht SET_REQUEST übertragen, siehe Bezugszeichen 108, in der als betroffenes Datenobjekt das Spaltenobjekt 60 angegeben ist. Der Konfigurationsstatus wird durch die Wartungsnachricht 108 auf einen Wert für den Zustand "aktiv" (active) gesetzt.

Die Schnittstelle 24 wird aufgrund des veränderten Konfigurationsstatus veranlaßt, zu einem Zeitpunkt t3 eine interne Nachricht I_SET_LAYER an das MIB-Zugriffssystem 32 zu übermitteln. In der Nachricht I_SET_LAYER sind Daten enthalten, deren Werte den in den Spaltenobjekten 54, 56 und 58 gespeicherten Werten entsprechen. Der Protokollschichtindex, der Protokollschichttyp bzw. der Index der unteren Protokollschicht wird in den Figuren 3A, 3B, 4A, 4B und 5 in Anlehnung an die oben an Hand der Figur 2 erläuterte Datenstruktur zu seiner Speicherung als xIndex, xType bzw. xLowerLayer bezeichnet. Das Zugriffssystem 32 überprüft in einem Verfahrensschritt S1, ob der Protokollschichtindex den Wert "0" hat. Beim Einrichten einer Protokollschicht ist dies der Fall. Deshalb wird anschließend in einem Verfahrensschritt S2 ein Wert für den Protokollschichtindex der einzurichtenden Protokollschicht nach einem vorgegebenen Verfahren berechnet. Das vorgegebene Verfahren gewährleistet, daß der Wert des Protokollschichtindex eindeutig innerhalb des Netzelementes 14 ist. In einem Verfahrensschritt S3 werden die anderen Tabellen der Datenbasis mit den Angaben für den Protokollschichtindex, den Protokollschichttyp und die untere Protokollschicht 102 der oberen Protokollschicht 104 versorgt, z.B. die Tabellen 40, 42 (ifTable und ifStackTable) der Datenbasis 34.

Danach wird zu einem Zeitpunkt t4 vom Zugriffssystem 32 an die Schichtsteuerung 35 eine interne Nachricht I_CREATE_LAYER gesendet, die als Argumente die Werte für den Protokollschichtindex, den Protokollschichttyp und den Index der unteren Protokollschicht 102 enthält. Die bisher an Hand der Figur 3B erläuterten Vorgänge werden unabhängig vom Typ der einzurichtenden Protokollschicht 104 einheitlich ausgeführt. Die Schichtsteuerung 35 wählt dagegen abhängig vom Typ der einzurichtenden Protokollschicht 104 ein Konfigurationsverfahren aus, das sich von den Konfigurationsverfahren für andere Typen von Protokollschichten unterscheidet. Das jeweilige Konfigurationsverfahren wird von dem Hersteller des Programms zur Ausführung der Protokollschichten vorgegeben. In nicht dargestellten Verfahrensschritten veranlaßt die Schichtsteuerung 35 den Start eines Konfigurationsprogramms zur Konfiguration der Protokollschicht 104 mit Parametern, die dazu führen, daß die Protokollschicht 104 im Protokollstapel 100 unmittelbar oberhalb der Protokollschicht 102 eingerichtet wird. Dabei wird das Konfigurationsprogramm für die Protokollschicht verwendet, die durch den Protokollschichttyp angegeben ist. Zu einem folgenden Zeitpunkt t5 wird von der Schichtsteuerung 35 eine interne Nachricht I_CREATE_LAYER_ACK an das Zugriffssystem 32 zur Bestätigung der zum Zeitpunkt t4 empfangenen Nachricht übermittelt. Die Bestätigungsnachricht enthält einen Fehlercode (errorCode), dessen Wert angibt, ob die obere Protokollschicht 104 fehlerfrei im Protokollstapel 100 eingerichtet werden konnte oder ob bestimmte Fehler bei der Einrichtung aufgetreten sind.

In einem Verfahrensschritt S4 überprüft das Zugriffssystem 32 den Fehlercode. Wird festgestellt, daß kein Fehler vorlag, so werden keine weiteren Schritte ausgeführt und das Verfahren wird in einem Verfahrensschritt S5 beendet. Ist dagegen ein Fehler aufgetreten, so werden in einem Verfahrensschritt S6 die im Verfahrensschritt S3 in die Tabellen der Datenbasis 34 eingetragenen Änderungen wieder rückgängig gemacht.

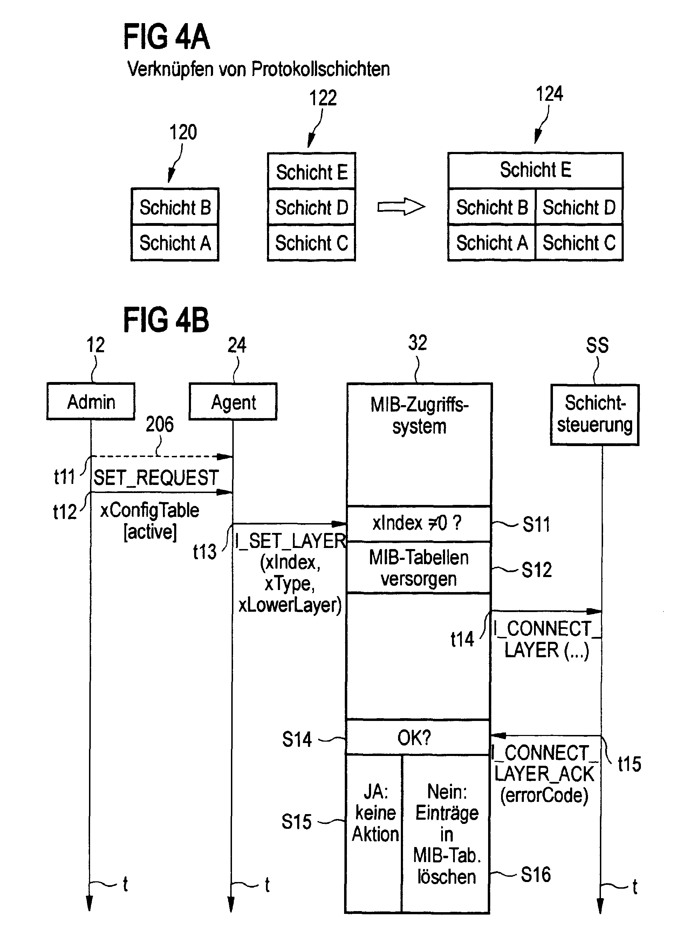

Figur 4A zeigt zwei Protokollstapel 120 und 122, die mit Hilfe der in Figur 4B gezeigten Verfahrensschritte zu einem Protokollstapel 124 verknüpft werden sollen. Der Protokollstapel 120 enthält eine unterste Protokollschicht A und eine darüberliegende Protokollschicht B. Der Protokollstapel 122 enthält von unten nach oben die Protokollschichten C, D und E. Die Protokollstapel 120, 122 sind beispielsweise dann zu verknüpfen, wenn die Schnittstelle 26 bzw. 28 eine Multiplexfunktion realisiert.

Zu einem Zeitpunkt t11 wird vom Netzwartungsrechner 12 aus eine Wartungsnachricht 206 an die Schnittstelle 24 gesendet. Die Wartungsnachricht 206 ist eine SET_REQUEST Nachricht, in der als betroffenes Datenobjekt ein Datenobjekt der Datenstruktur xConfigStatus angegeben ist. Als Zustand für dieses Datenobjekt wird der Zustand "erzeuge und warte" (create and wait) angegeben. Weiterhin enthält die Nachricht einen Konfigurations-Index zur Auswahl des neu anzulegenden Eintrags im Datenobjekt 36. Der Eintrag im Datenobjekt wird erzeugt. Das Spaltenobjekt mit der Datenstruktur xConfigStatus dieses Eintrags wird mit einem Wert für den Zustand "erzeuge und warte" (create and wait) belegt, der angibt, daß der betreffende Eintrag momentan erstellt wird. Danach werden zwischen dem Zeitpunkt t11 und einem Zeitpunkt t12 nicht dargestellte Wartungsnachrichten übertragen, in denen als Index für die darunterliegende Protokollschicht ein Wert angegeben wird, der die Schicht B bezeichnet. Der Wert wird im Spaltenobjekt des Datentyps xLowerLayer des zu erstellenden Eintrags gespeichert.

Für das Spaltenobjekt mit der Datenstruktur xType wird der Wert der oberen Protokollschicht E als Protokollschichttyp angegeben, um der Schichtsteuerung 35 die Auswahl des richtigen Konfigurationsprogrammes zu ermöglichen. Das Spaltenobjekt vom Datentyp xIndex erhält einen Wert, der die obere Protokollschicht E bezeichnet.

Anschließend wird zu einem Zeitpunkt t12 vom Netzwartungsrechner 12 zur Schnittstelle 24 eine Wartungsnachricht SET_REQUEST gesendet, mit deren Hilfe der Status des Eintrages für die Verknüpfung der Protokollschichten B und E auf einen Wert gesetzt wird, der angibt, daß der Eintrag "aktiv" (active) ist. Daraufhin wird durch die Schnittstelle 24 zu einem Zeitpunkt t13 eine interne Nachricht I_SET_LAYER an das Zugriffssystem 32 übermittelt, in der die zuvor vom Netzwartungsrechner 12 übermittelten Werte für den Protokollschichtindex, den Protokollschichttyp und die darunter liegende Protokollschicht angegeben sind. Das Zugriffssystem 32 überprüft in einem Verfahrensschritt S11, ob der Wert für den Protokollschichtindex ungleich Null ist. Ist dies der Fall, so werden in einem folgenden Verfahrensschritt S12 die anderen Tabellen der Datenbasis 34 mit den in der internen Nachricht I_SET_LAYER angegebenen Werten versorgt.

Zu einem Zeitpunkt t14 wird vom Zugriffssystem 32 eine interne Nachricht I_CONNECT_LAYER an die Schichtsteuerung 35 übermittelt, welche ebenfalls die in der internen Nachricht I_SET_LAYER enthaltenen Werte enthält. Die bisher an Hand der Figur 4B erläuterten Verfahrensschritte werden unabhängig vom Typ der zu verknüpfenden Protokollschichten einheitlich ausgeführt. Die Schichtsteuerung 35 wählt jedoch abhängig von den Typen der zu verknüpfenden Protokollschichten unterschiedliche Konfigurationsverfahren aus und veranlaßt das Ausführen von herstellerspezifischen Konfigurationsverfahren. Als Ergebnis entsteht der Protokollstapel 124, bei dem die Schichten B und E verknüpft sind.

Zu einem folgenden Zeitpunkt t15 sendet die Schichtsteuerung 35 eine interne Bestätigungsnachricht I_CONNECT_LAYER_ACK an das Zugriffssystem 32, um den Erhalt der Nachricht I_CONNECT_LAYER zu bestätigen. Die Nachricht I_CONNECT_LAYER_ACK enthält einen Fehlercode (errorCode).

Nach dem Empfang der Bestätigungsnachricht I_CONNECT_LAYER-_ACK überprüft das Zugriffssystem 32 in einem Verfahrensschritt S14 den Fehlercode. Zeigt der Fehlercode an, daß die Schichten B und E fehlerfrei verknüpft werden konnten, so wird das Verfahren zum Verknüpfen der Protokollschicht in einem Verfahrensschritt S15 ohne weitere Aktionen beendet. Wird dagegen im Verfahrensschritt S14 festgestellt, daß das Verknüpfen der Protokollschichten B und E nicht fehlerfrei durchgeführt werden konnte, so werden in einem Verfahrensschritt S16 die im Verfahrensschritt S12 erfolgten Änderungen in der Datenbasis 34 rückgängig gemacht.

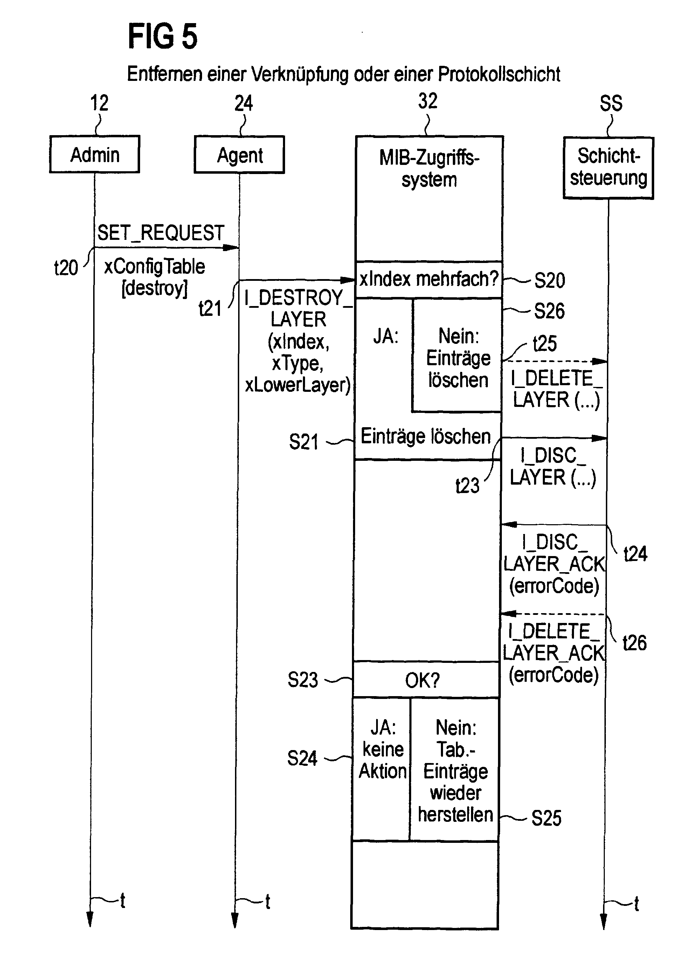

Figur 5 zeigt Verfahrensschritte, die beim Entfernen einer Verknüpfung von Protokollschichten oder beim Entfernen einer Protokollschicht ausgeführt werden. Es sei zunächst angenommen, daß die Verknüpfung der Protokollschichten B und E des Protokollstapels 124 wieder entfernt werden soll, siehe Figur 4A. Dazu wird zu einem Zeitpunkt t20 vom Netzwartungsrechner 12 eine Wartungsnachricht SET_REQUEST an die Schnittstelle 24 übertragen. In der Wartungsnachricht SET_REQUEST ist der mit Hilfe des an Hand der Figur 4B erläuterten Verfahrens erstellte Eintrag im Datenobjekt 36 durch den Konfigurationsindex bezeichnet. Für das Spaltenobjekt des Datentyps xConfigStatus dieses Eintrags wird ein Wert für einen Zustand "entferne" (destroy) angegeben, der anzeigt, daß dieser Eintrag aus dem Datenobjekt 36 entfernt werden soll.

Nach dem Empfang der Wartungsnachricht sendet die Schnittstelle 24 zu einem Zeitpunkt t21 eine interne Nachricht I_DESTROY_LAYER an das Zugriffssystem 32. Als Parameter werden die Werte für den Protokollschichtindex, den Protokollschichttyp und den Index der darunterliegenden Protokollschicht des zu entfernenden Eintrages übermittelt. Das Zugriffssystem 32 überprüft daraufhin in einem Verfahrensschritt S20, ob der Wert des Protokollschichtindex mehrfach vergeben worden ist, wie es beim Verknüpfen von Protokollschichten der Fall ist. Ist der Wert mehrfach vergeben worden, so werden in einem folgenden Verfahrensschritt S21 vom Zugriffssystem 32 Einträge aus den Tabellen der Datenbasis 34 entfernt, die nach dem Erstellen des nun aus dem Datenobjekt 36 zu entfernenden Eintrages eingetragen worden sind. Anschließend wird zu einem Zeitpunkt t23 vom Zugriffssystem 32 an die Schichtsteuerung 35 eine interne Nachricht I_DISC_LAYER übermittelt, welche die gleichen Parameter wie die zum Zeitpunkt t21 übertragene Nachricht I_DESTROY_LAYER enthält.

Die bisher an Hand der Figur 5 erläuterten Verfahrensschritte werden unabhängig vom Typ der zu entfernenden Protokollschicht ausgeführt. Erst die Schichtsteuerung 35 führt Verfahren aus, die vom Typ der Protokollschichten abhängen, deren Verknüpfung entfernt werden soll. Dabei werden Konfigurationsverfahren durchgeführt, die von den Herstellern der Programme für die Durchführung der Funktionen dieser Protokollschichten vorgesehen sind. Diese Verfahrensschritte sind in Figur 5 nicht dargestellt. Nach dem Entfernen der Verknüpfung sendet die Schichtsteuerung 35 zu einem Zeitpunkt t24 eine interne Bestätigungsnachricht I_DISC_LAYER_ACK zur Bestätigung des Empfangs der internen Nachricht I_DISC_LAYER an das Zugriffssystem 32. Die Bestätigungsnachricht I_DISC_LAYER_ACK enthält einen Fehlercode (errorCode), der angibt, ob die Verknüpfung ordnungsgemäß entfernt werden konnte oder ob ein Fehler aufgetreten ist.

In einem Verfahrensschritt S23 überprüft das Zugriffssystem 32 den Fehlercode. Ist beim Entfernen der Verknüpfung kein Fehler aufgetreten, so wird das Verfahren in einem Verfahrensschritt S24 ohne weitere Aktionen beendet. Ist dagegen ein Fehler aufgetreten, so werden in einem Verfahrensschritt S25 die im Verfahrensschritt S21 beseitigten Einträge wieder hergestellt.

Soll eine Protokollschicht aus einem Protokollstapel entfernt werden, so wird ähnlich wie beim Entfernen einer Verknüpfung vorgegangen. Für das Entfernen von Protokollschichten gilt die allgemeine Regel, daß die Protokollschichten vom oberen Ende des Protokollstapels her entfernt werden, d.h. in umgekehrter Reihenfolge wie beim Einrichten. Soll beispielsweise die Protokollschicht 104 des Protokollstapels 100 entfernt werden, so enthält die zum Zeitpunkt t20 gesendete Wartungsnachricht SET_REQUEST das Kennzeichen für das Spaltenobjekt 60 und den Konfigurationsindex des Eintrages 50, siehe Figuren 2 und 3. Durch die Wartungsnachricht SET_REQUEST erhält das Spaltenobjekt 60 einen Wert für den Zustand "entferne" (destroy), der anzeigt, daß der Eintrag 50 entfernt werden soll. Daraufhin erzeugt die Schnittstelle 24 zum Zeitpunkt t21 die Nachricht I_DESTROY_LAYER mit den Werten für den Protokollschichtindex, den Protokollschichttyp und für den Index der darunterliegenden Protokollschicht aus den Datenobjekte 54, 56 und 58. Das Zugriffssystem 32 überprüft nach dem Empfang der internen Nachricht I_DESTROY_LAYER, ob der Wert des Protokollschichtindex mehrfach vergeben worden ist. Beim Protokollstapel 100 ist dies nicht der Fall, weil die Schichten jeweils nur mit einer darunterliegenden Protokollschicht verknüpft sind. Deshalb werden in einem Verfahrensschritt S26 die Einträge in den Tabellen der Datenbasis 34 gelöscht, die im Verfahrensschritt S3 eingetragen worden sind, siehe Figur 3B. Anschließend wird zu einem Zeitpunkt t25 eine interne Nachricht I_DELETE_LAYER vom Zugriffssystem 32 an die Schichtsteuerung 35 gesendet. Diese interne Nachricht I_DELETE_LAYER enthält die Werte für den Protokollschichtindex, den Protokollschichttyp und die darunterliegende Protokollschicht des Eintrags 50. Die Schichtsteuerung 35 veranlaßt daraufhin den Aufruf von herstellerspezifischen Konfigurationsprogrammen abhängig vom Typ der zu entfernenden Protokollschicht 104. Beim Ausführen der ausgewählten Konfigurationsprogramme wird die Protokollschicht 104 aus dem Protokollstapel 100 entfernt.

Zu einem Zeitpunkt t26 bestätigt die Schichtsteuerung 35 die Nachricht I_DELETE_LAYER mit Hilfe einer Bestätigungsnachricht I_DELETE_LAYER_ACK, die einen Fehlercode (errorCode) enthält.

Die Bearbeitung des Fehlercodes erfolgt wie oben für das Entfernen einer Verknüpfung erläutert, in den Verfahrensschritten S23, S24 und S25. Im Verfahrensschritt S25 werden die Einträge in den Tabellen der Datenbasis 34 wiederhergestellt, die im Verfahrensschritt S26 gelöscht worden sind. Durch zu entfernende Einträge, z.B. durch den Eintrag 50, belegter Speicherplatz wird wieder frei gegeben.

Bei einem weiteren Ausführungsbeispiel werden von der Steuerung des Netzelementes 14 automatisch interne Nachrichten I_SET_LAYER und I_DESTROY_LAYER erzeugt, wenn z.B. eindeutig feststeht, daß es nur eine Möglichkeit für darüberliegende Protokollschichten gibt oder wenn andere Vorgänge im Netzelement 14 dies erfordern.

Bei einem nächsten Ausführungsbeispiel werden beim Einrichten einer Protokollschicht auch Datei-Deskriptoren mit Hilfe von Bestätigungsnachrichten von der Schichtsteuerung 35 an das Zugriffssystem 32 übergeben und dort in der Datenbasis 34 gespeichert. Beim Einrichten einer unmittelbar darüberliegenden Protokollschicht werden diese Datei-Deskriptoren dann vom Zugriffssystem 32 aus der Datenbasis 34 ausgelesen und an die Schichtsteuerung 35 übermittelt.

Durch das automatische Erzeugen und Pflegen von Standardtabellen der Datenbasis 34 wird erreicht, daß andere, marktübliche Programme, die nur eine Standarddatenbasis kennen, z.B. die Datenbasis MIB II, auf die Datenbasis 34 zugreifen können.

## Patentansprüche

1. Verfahren zum Konfigurieren einer Netzschnittstelle (26, 28), bei dem:
ein Netzelement (14) in einem Übertragungsnetz mindestens eine Schnittstelle (26, 28) zum Übertragungsnetz enthält,
die Arbeitsweise der Schnittstelle (26, 28) durch einen Protokollstapel (100) festgelegt wird, der mehrere Protokollschichten (102, 104) enthält,
von einer Wartungseinheit (24) des Netzelements (14) für unterschiedliche Typen von Protokollschichten, deren Funktionen abhängig vom Typ mit Hilfe von Einheiten verschiedener Hersteller ausgeführt werden, nach einem einheitlichen Verfahren Wartungsnachrichten (106) entgegengenommen werden, die die Verknüpfung einer durch die Wartungsnachricht (106) betroffenen Protokollschicht (104) mit einer anderen Protokollschicht (102) desselben Protokollstapels (100) festlegt, und
abhängig vom Typ der durch die Wartungsnachricht (106) betroffenen Protokollschicht (104) ein vom Hersteller der Einheit zur Ausführung der Funktionen dieser Protokollschicht (104) vorgesehenes Konfigurationsverfahren ausgeführt wird, das sich vom Konfigurationsverfahren für eine Einheit zur Ausführung der Funktionen einer Protokollschicht anderen Typs unterscheidet, und
bei der Ausführung des Konfigurationsverfahrens die Schnittstelle (26, 28) gemäß der in der Wartungsnachricht (106) enthaltenen Verknüpfung konfiguriert wird.

2. Verfahren nach Anspruch 1, **dadurch gekennzeichnet, daß** die Wartungseinheit gemäß dem Standard SNMP arbeitet,
daß eine Datenstruktur (36) festgelegt wird, die Datenfelder (52 bis 60) für Daten enthält, die für die Festlegung der Verknüpfung einer Protokollschicht (104) erforderlich sind,
und daß die Wartungseinheit (24) in den Wartungsnachrichten (106) enthaltene Daten für die Festlegung der Verknüpfung in einem Datenobjekt mit der festgelegten Datenstruktur speichert.

3. Verfahren nach Anspruch 2, **dadurch gekennzeichnet, daß** die Datenstruktur (36) zusätzlich zu der im Standard SNMP festgelegten Datenstruktur ifTable und/oder ifStackTable festgelegt ist oder
daß die Datenstruktur ifTable und/oder ifStackTable nach einer Änderung des Standards SNMP die festgelegte Datenstruktur enthalten.

4. Verfahren nach Anspruch 2 oder 3, **dadurch gekennzeichnet, daß** die Datenstruktur (36) in einer privaten Datenbasis oder in einer standardisierten Datenbasis (34) festgelegt ist.

5. Verfahren nach einem der vorhergehenden Ansprüche, **dadurch gekennzeichnet, daß** die Datenstruktur (36) als Tabelle festgelegt ist, die mehrere gleichartige Einträge (50) enthält.

6. Verfahren nach Anspruch 5, **dadurch gekennzeichnet, daß** ein Eintrag (50) in der Tabelle (36) folgende Daten enthält:
ein Tabellenindexdatum zur Steuerung des Zugriffs auf Daten des jeweiligen Eintrags (50),
und/oder ein Schnittstellenindexdatum zur Unterscheidung einer Protokollschicht (104) von anderen Protokollschichten (102),
und/oder ein Typdatum zum Speichern des Typs der durch den Eintrag bezeichneten Protokollschicht,
und/oder ein Hinweisdatum auf eine unter der durch den jeweiligen Eintrag festgelegten Protokollschicht angeordneten Protokollschicht desselben Protokollstapels,
und/oder ein Statusdatum, das den Status eines Eintrages angibt.

7. Verfahren nach Anspruch 1, **dadurch gekennzeichnet, daß** die Wartungseinheit gemäß dem Standard CMIP oder gemäß dem Internet-Dienst Telnet arbeitet.

8. Verfahren nach einem der vorhergehenden Ansprüche, **dadurch gekennzeichnet, daß** mindestens eine Schichtsteuerungseinheit (35) die Ausführung der Konfigurationsverfahren veranlaßt.

9. Verfahren nach einem der vorhergehenden Ansprüche, **dadurch gekennzeichnet, daß** zum Zugriff auf durch die Wartungsnachricht betroffene Daten eine Zugriffseinheit (32) im Netzelement (14) ausgeführt wird,
und daß die Zugriffseinheit (32) netzelementinterne Nachrichten mit der Wartungseinheit (24) und vorzugsweise auch mit der Schichtsteuerungseinheit (35) austauscht.

10. Verfahren nach Anspruch 9, **dadurch gekennzeichnet, daß** die Zugriffseinheit (32) auf eine Datenbasis mit Datenobjekten zugreift, deren Struktur vorzugsweise durch einen Standard festgelegt ist, vorzugsweise mit Datenobjekten, deren Struktur durch die Datenbasis MIB II des Standards SNMP oder einer dieser Datenbasis nachfolgende Datenbasis vorgegeben ist.

11. Verfahren nach einem der vorhergehenden Ansprüche, **dadurch gekennzeichnet, daß** innerhalb des Netzelementes (14) automatisch ein Anreiz zum Konfigurieren der Schnittstelle (26, 28) erzeugt wird,
und daß der Anreiz im wesentlichen einem für dieselbe Konfiguration von einer Netzwartungseinheit erzeugten Anreiz entspricht.

12. Verfahren nach Anspruch 9 oder 10 sowie 11, **dadurch gekennzeichnet, daß** der Anreiz an die Zugriffseinheit (32) gerichtet wird,
und daß vom der Zugriffseinheit (32) durch den Anreiz erforderliche Änderungen in einer Datenbasis (34) ausgeführt werden.

13. Verfahren nach Anspruch 9 oder 10, **dadurch gekennzeichnet, daß** zwischen Zugriffseinheit (32) und Schichtsteuerungseinheit (35) Nachrichten ausgetauscht werden, die Daten über die Verknüpfung von Protokollschichten enthalten.

14. Netzelement (14), **gekennzeichnet durch** ein Computerprogramm, bei dessen Ausführung **durch** einen Prozessor der Einsatz des Netzelementes (14) in einem Verfahren gemäß einem der Ansprüche 1 bis 13 ermöglicht wird.

15. Computerprogramm, **dadurch gekennzeichnet, daß** bei der Ausführung seiner Befehle durch einen Prozessor die Verfahrensschritte nach einem der Ansprüche 1 bis 13 ausgeführt werden.

16. Datenträger, **dadurch gekennzeichnet, daß** er Daten eines Computerprogramms nach Anspruch 15 speichert.
